# EUROPÄISCHE PATENTSCHRIFT

(11) **EP 0 478 551 B1**
(45) Veröffentlichungstag und Bekanntmachung des Hinweises auf die Patenterteilung: **09.03.1994**
(21) Anmeldenummer: 90904797.9
(22) Anmeldetag: 19.03.1990
(51) Int. Cl.: B62D 27/02, B62D 23/00

(54) **FAHRZEUGKAROSSERIE**
MOTOR VEHICLE COACHWORK
CARROSSERIE DE VEHICULE

(30) Priorität: 05.06.1989 DE 3918283
(43) Veröffentlichungstag der Anmeldung: 08.04.1992
(73) Patentinhaber: AUDI AG, 85045 Ingolstadt (DE)
(72) Erfinder: KLAGES, Ulrich, D-8071 Lenting (DE); ENNING, Norbert, D-8079 Kipfenberg (DE); TIMM, Heinrich, D-8070 Ingolstadt (DE)
(74) Vertreter: Engelhardt, Harald
(86) Internationale Anmeldenummer: EP9000450
(87) Internationale Veröffentlichungsnummer: WO9014982

(56) Entgegenhaltungen:
- GB-A- 2 049 567
- US-A- 3 591 231

## Beschreibung

Die Erfindung bezieht sich auf eine Fahrzeugkarosserie mit mindestens einer Aussparung zur Aufnahme einer Türe oder eines Fensters gemäß dem Oberbegriff des Patentanspruchs 1.

Eine gattungsgemäße Fahrzeugkarosserie ist aus der US-PS 4 618 163 bekannt. Die Aussparungen zur Aufnahme von Türen oder Fenstern sind dort durch aus Strangprofilen hergestellte Rahmenteile begrenzt, welche durch im Gießverfahren hergestellte Knotenelemente miteinander verbunden sind. Diese Bauweise bedingt eine Vielzahl von Stoßstellen zwischen den Strangprofilen und den Knotenelementen.

Der Erfindung liegt die Aufgabe zugrunde, bei einer Fahrzeugkarosserie gemäß dem Oberbegriff des Patentanspruchs 1 die Anzahl der Stoßstellen im Bereich von Aussparungen zur Aufnahme von Türen oder Fenstern zu reduzieren.

Die Aufgabe wird durch die kennzeichnenden Merkmale des Patentanspruchs 1 gelöst.

Dadurch, daß die Strangprofile auf ihrer der Aussparung zugewandten Seite unmittelbar aneinanderstoßen, wird die Anzahl der Stoßstellen um die Hälfte reduziert. Bei den bekannten Ausbildungen wird nämlich die Aussparung nicht nur durch Strangprofile, sondern zusätzlich auch durch die der Aussparung zugewandten Abschnitte der Knotenelemente gebildet. Diese Ausführung bedingt in jedem Übergangsbereich von dem Knotenelement zu dem angeschlossenen Strangprofil eine Stoßstelle.

Dadurch, daß ein Teil des Knotenelements die Aussparung begrenzt, ist ein exakter Verlauf der Kontur für die Aussparung schwer herzustellen. Es erfordert eine genaue Einpassung des Knotens und darüber hinaus eine stabile Fixierung desselben während des Verbindungsvorganges.

Die den Aussparungen zugewandten Bereiche der Strangprofile bzw. der Knotenelemente bilden meist eine Anlagefläche oder eine Dichtungsfläche für in die Aussparung einzufügende Türen oder Scheiben. Durch die vorgeschlagene Ausgestaltung wird nun erreicht, daß nur noch Strangprofile die Aussparung begrenzen. Somit ist in einfacher Weise eine kontinuierlich verlaufende und paßgenaue Schmiegefläche für eine Türe gegeben. Der kontinuierliche Konturverlauf stellt außerdem eine exakte Anlagefläche für eine Dichtung dar.

Um trotz des Umstandes, daß die der Aussparung zugewandte Seite der Strangprofile aneinanderstoßen, die Strangprofile durch ein Knotenelement verbinden zu können, wird vorgeschlagen, daß die Strangprofile auf ihrer der Aussparung abgewandten Seite im Bereich der Stoßstelle mit einer Ausklinkung versehen sind. In dem durch die Ausklinkung geschaffenen Raum wird dann das Knotenelement angeordnet und mit den Strangprofilen verbunden. Durch die Ausklinkung wird außerdem eine größere Verbindungsfläche geschaffen, welche sich besonders vorteilhaft dann auswirkt, wenn die Bauteile miteinander verklebt werden.

Gemäß einer vorteilhaften Ausgestaltung der Erfindung kann das Knotenelement durch einen auf seiner der Aussparung abgewandten Seite offenen Formkörper gebildet sein. Ein solcher offener Formkörper läßt sich besonders einfach herstellen und mit anderen Bauteilen verbinden.

Zweckmäßig ist es, wenn das als offener Formkörper ausgebildete Knotenelement durch ein Blechteil verschlossen wird, dessen Außenfläche der Kontur der sich an das Knotenelement anschließenden Strangprofile angepaßt ist.

Um eine vergrößerte Anlagefläche des Knotenelements an den Stranprofilen zu erreichen kann es vorteilhaft sein, wenn das Knotenelement die sich an die Ausklinkungen anschließenden Abschnitte der Strangprofile übergreift. Die vergrößerten Berührungsflächen werden zweckmäßig zum Verbinden der Bauteile herangezogen.

Das Knotenelement und die Strangprofile können weiterhin durch ein Blech abgedeckt sein, welches einen Teil der Außenhaut der Fahrzeugkarosserie bildet. Ein solches Blech stellt sicher, daß zum einen die nach außen hin offenen Knotenelemente abgedeckt werden und die Zahl der von außen sichtbaren Stoßstellen reduziert wird. Außerdem wird eine gleichmäßige und glatte Basis zum Lackieren einer solchermaßen hergestellten Fahrzeugkarosserie geschaffen.

Ein Ausführungsbeispiel der Erfindung ist in der Zeichnung dargestellt und wird nachfolgend näher beschrieben. Es zeigt
- Fig. 1: in schematischer Darstellung eine Draufsicht auf ein Knotenelement eines Personenkraftwagens, welches eine vordere Dachsäule, einen vorderen Dachrahmen und einen seitlichen Dachrahmen miteinander verbindet,
- Fig. 2: einen Schnitt entlang der Linie II/II aus Fig. 1.

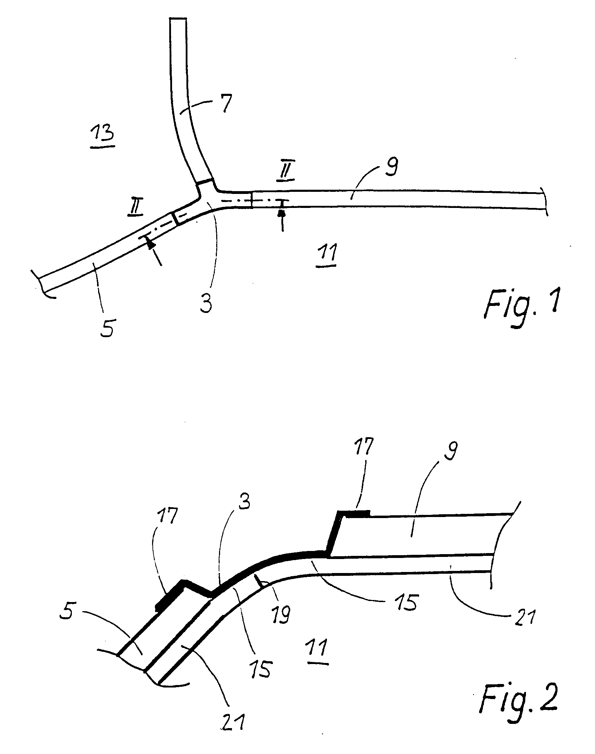

Fig. 1 zeigt abschnittsweise und schematisch ein Knotenelement 3, welches eine vordere Dachsäule 5, einen vorderen Dachrahmen 7 und einen seitlichen Dachrahmen 9 miteinander verbindet. Die vordere Dachsäule 5 und der seitliche Dachrahmen 9 begrenzen zusammen mit weiteren, in der Zeichnung nicht dargestellten Bauteilen eine Aussparung 11 zur Aufnahme einer Türe (nicht dargestellt). In gleicher Weise begrenzt die vordere Dachsäule 5 zusammen mit einem vorderen Dachrahmen 7 sowie weiteren Rahmenteilen (nicht dargestellt) eine Aussparung 13 zur Aufnahme einer Scheibe (nicht dargestellt).

Der in Fig. 2 dargestellte Schnitt zeigt deutlich das nach außen hin offene Knotenelement 3. Zur Aufnahme des Knotenelements ist sowohl die vordere Dachsäule 5, als auch der seitliche Dachrahmen 9 mit einer Ausklinkung 15 versehen. Um eine vergrößerte Anlagefläche des Knotenelements 3 an die vordere Dachsäule 5 und an den seitlichen Dachrahmen 9 zu schaffen, ist das Knotenelement 3 mit seitlichen Ansätzen 17 versehen, welche die zugeordneten Strangprofile übergreifen und mit diesen verbunden sind (nicht dargestellt).

Wie Fig. 2 zeigt, stößt die vordere Dachsäule 5 in ihrem der Aussparung 11 zugewandten Abschnitt an den seitlichen Dachholm 9 an, so daß nur eine Stoßstelle 19 entsteht. Dadurch ist ein kontinuierlicher Verlauf der Dichtungsflansche 21 möglich, welche auf der der Aussparung 11 zugewandten Seite der vorderen Dachsäule 5 und des seitlichen Dachrahmens 9 angeformt sind.

## Patentansprüche

1. Fahrzeugkarosserie mit mindestens einer Aussparung zur Aufnahme einer Türe oder eines Fensters, wobei die Aussparung durch aus Strangprofilen hergestellten Rahmenteile begrenzt ist und die Strangprofile durch Knotenelemente miteinander verbunden sind, dadurch gekennzeichnet, daß die Strangprofile (5, 7, 9) auf ihrer der Aussparung (11, 13) zugewandten Seite aneinanderstoßen, daß die Strangprofile (5, 7, 9) auf ihrer der Aussparung (11, 13) abgewandten Seite im Bereich der Stoßstelle (19) mit einer Ausklinkung (15) versehen sind und daß in dem durch die Ausklinkung (15) geschaffenen Raum das die Strangprofile (5, 7, 9) verbindende Knotenelement (3) angeordnet ist.

2. Fahrzeugkarosserie nach Anspruch 1, dadurch gekennzeichnet, daß das Knotenelement (3) durch einen auf seiner der Aussparung (11, 13) abgewandten Seite offenen Formkörper gebildet ist.

3. Fahrzeugkarosserie nach Anspruch 2, dadurch gekennzeichnet, daß das Knotenelement durch ein Blechteil verschlossen ist, dessen Außenfläche der Kontur der sich an das Knotenelement (3) anschließenden Strangprofile (5, 7, 9) angepaßt ist.

4. Fahrzeugkarosserie nach Anspruch 1 oder 2, dadurch gekennzeichnet, daß das Knotenelement (3) die sich an die Ausklinkung (15) anschließenden Abschnitte der Strangprofile (5, 7, 9) übergreift und diese Abschnitte mit dem Knotenelement (3) verbunden sind.

5. Fahrzeugkarosserie nach Anspruch 4, dadurch gekennzeichnet, daß das Knotenelement (3) und die Strangprofile (5, 7, 9) durch ein Blech abgedeckt sind, welches einen Teil der Außenhaut der Fahrzeugkarosserie bildet.

## Claims

1. Vehicle body with at least one opening for accommodating a door or a window, the opening being bounded by frame parts manufactured from extruded profiles and the extruded profiles being connected together by node elements, characterized in that the extruded profiles (5, 7, 9) butt together on their side facing towards the opening (11, 13), in that the extruded profiles (5, 7, 9) are provided with a notch (15) in the region of the butt joint (19) on their side facing away from the opening (11, 13) and in that the node element (3) connecting the extruded profiles (5, 7, 9) is arranged in the space created by the notch (15).

2. Vehicle body according to Claim 1, characterized in that the node element (3) is formed by a preform open on its side facing away from the opening (11, 13).

3. Vehicle body according to Claim 2, characterized in that the node element is closed by a sheet-metal part whose outer surface is matched to the contour of the extruded profiles (5, 7, 9) following on from the node element (3).

4. Vehicle body according to Claim 1 or 2, characterized in that the node element (3) passes over the sections of the extruded profiles (5, 7, 9) following on from the notch (15) and these sections are connected to the node element (3).

5. Vehicle body according to Claim 4, characterized in that the node element (3) and the extruded profiles (5, 7, 9) are covered by a sheet-metal panel which forms part of the outer skin of the vehicle body.

## Revendications

1. Carrosserie de véhicule, comportant au moins une découpure destinée à recevoir une porte ou une fenêtre, la découpure étant délimitée par des éléments de cadre fabriqués en profilés extrudés et les profilés extrudés étant assemblés par des éléments de jonction, caractérisée en ce que les profilés extrudés (5, 7, 9) se joignent bout à bout sur leur côté dirigé vers la découpure (11, 13), en ce que les profilés extrudés (5, 7, 9) sont munis d'une encoche (15) sur leur côté dirigé à l'opposé de la découpure (11, 13) dans la région du point de jonction (19), et en ce que l'élément de jonction (3) qui relie les profilés extrudés (5, 7, 9) est disposé dans le creux créé par l'encoche (15).

2. Carrosserie de véhicule selon la revendication 1, caractérisée en ce que l'élément de jonction (3) est constitué par une pièce profilée découverte sur son côté dirigé a l'opposé de la découpure (11, 13).

3. Carrosserie de véhicule selon la revendication 2, caractérisée en ce que l'élément de jonction est masqué par une pièce de tôle dont la surface extérieure est adaptée au contour des profilés extrudés (5, 7, 9) contigus à l'élément de jonction (3).

4. Carrosserie de véhicule selon la revendication 1 ou 2, caractérisée en ce que l'élément de jonction (3) recouvre les parties des profilés extrudés (5, 7, 9) contiguës à l'encoche (15) et en ce que ces parties sont fixées à l'élément de jonction (3).

5. Carrosserie de véhicule selon la revendication 4, caractérisée en ce que l'élément de jonction (3) et les profilés extrudés (5, 7, 9) sont recouverts par une tôle qui fait partie du revêtement extérieur de la carrosserie de véhicule.
